# EUROPÄISCHE PATENTSCHRIFT

(11) **EP 3 120 339 B1**
(45) Veröffentlichungstag und Bekanntmachung des Hinweises auf die Patenterteilung: **02.11.2022**
(21) Anmeldenummer: 16727625.2
(22) Anmeldetag: 31.05.2016
(51) Int. Cl.: G08G 1/0967, G01C 21/34, G01C 21/36

(54) **VERFAHREN ZUM BETREIBEN EINES FAHRZEUGS UND FAHRZEUG**
METHOD FOR OPERATING A VEHICLE, AND VEHICLE
PROCÉDÉ DE FONCTIONNEMENT D'UN VÉHICULE ET VÉHICULE

(30) Priorität: 02.06.2015 DE 102015007020
(43) Veröffentlichungstag der Anmeldung: 25.01.2017
(73) Patentinhaber: Audi AG, 85045 Ingolstadt (DE)
(72) Erfinder: LAMPRECHT, Andreas, 83714 Miesbach (DE); GOBY, Dominik, 85049 Gerolfing (DE)
(74) Vertreter: Bauer, Dominik Michael
(86) Internationale Anmeldenummer: PCT/EP2016/000891
(87) Internationale Veröffentlichungsnummer: WO 2016/192850

(56) Entgegenhaltungen:
- WO-A1-2014/114751
- DE-A1-102008 015 232
- US-A1- 2003 193 394
- US-A1- 2004 203 919
- US-A1- 2005 033 504
- US-A1- 2010 191 453
- US-A1- 2011 248 867
- US-A1- 2012 330 546
- ILIAS LEONTIADIS ET AL: "Opportunistic spatio-temporal dissemination system for vehicular network", PROCEEDINGS OF THE FIRST INTERNATIONAL MOBISYS WORKSHOP ON MOBILE OPPORTUNISTIC NETWORKING : SAN JUAN, PUERTO RICO, JUNE 11, 2007, ACM, NEW YORK, NY , 11. Juni 2007 (2007-06-11), Seiten 39-46, XP002714005, ISBN: 978-1-59593-688-2 Gefunden im Internet: URL:http://citeseerx.ist.psu.edu/viewdoc/d ownload?doi=10.1.1.113.7998&rep=rep1&type= pdf [gefunden am 2013-09-30]

## Beschreibung

Die Erfindung betrifft ein Verfahren zum Betreiben eines Fahrzeugs, bei welchem eine Zentrale in Abhängigkeit von einer geographischen Position des Fahrzeugs wenigstens eine Information an eine Empfangseinrichtung des Fahrzeugs überträgt. Des Weiteren betrifft die Erfindung ein Fahrzeug mit einer Empfangseinrichtung.

Die US 2012/330546 A1 beschreibt ein Verkehrsmeldungssystem mit einem Positionsbestimmungssystem zum Bestimmen einer geographischen Position eines Abonnenten. Das Verkehrsmeldungssystem ist dazu ausgebildet, automatisch eine auf der geographischen Position des Abonnenten basierende Verkehrsmeldung an ein mit dem Abonnenten assoziiertes drahtloses Endgerät zu übermitteln.

Die ILIAS LEONTIADIS ET AL: "Opportunistic spatio-temporal dissemination system for vehicluar network", PROCEEDINGS OF THE FIRST INTERNATIONAL MOBISYS WORKSHOP ON MOBILE OPPORTUNISTIC NETWORKING: SAN JUAN, PUERTO RICO, JUNE 11, 2007, ACM, NEW YORK, NY 11 June 2007 (2007-06-11), Seiten 39-46, XP002714005, ISBN: 978-1-59593-688-2 beschreibt ein Verfahren, bei welchem ein Herausgeber eine Nachricht in einen interessierten Bereich weiterleitet. Ein Navigationssystem kann das Ziel des Fahrers, die vorgeschlagene Route und Karteninformationen benutzen um zu entscheiden, ob ein Fahrzeug daran interessiert ist, eine bestimmte Benachrichtigung zu erhalten. Zum Beispiel kann das Navigationssystem ein Empfangen von Benachrichtigungen über Straßenarbeiten, welche sich auf die berechnete Route auswirken, oder ein Empfangen von Benachrichtigungen über kostenloses Parken abonnieren, welche ein spezifisches Ziel betreffen. Des Weiteren kann der Fahrer verlangen, verfügbare Parkplätze in der Nähe seines aktuellen Standorts zu erhalten.

Fahrzeuge werden mehr und mehr mit internetfähigen Steuergeräten ausgestattet. Über eine Streckenvorausschau etwa mit Hilfe eines Navigationsgeräts des Fahrzeugs können so Fahrerassistenzsysteme auf Informationen zugreifen, welche etwa in Fahrtrichtung vor dem Fahrzeug liegende Geschwindigkeitsbeschränkungen, enge Kurvenradien und dergleichen umfassen. Derartige Informationen entstammen jedoch einer lokal im Fahrzeug gespeicherten Datenbank und sind deswegen als statisch zu betrachten.

Um auch aktuelle, dynamische Daten zu erhalten, werden bei aus dem Stand der Technik bekannten Fahrzeugen in regelmäßigen Abständen Anfragen an eine Zentrale wie einen Server gestellt. Der Server antwortet dann mit den für das einzelne Fahrzeug relevanten Informationen, etwa mit aktuellen Verkehrsinformationen, welche das Verkehrsgeschehen in einem bestimmten Umkreis um das Fahrzeug betreffen.

Bei einer solchen Kommunikation zwischen einem Fahrzeug und einer Zentrale wie einem Server kann wie vorstehend beschrieben die Kommunikation vom Fahrzeug initiiert werden. Hierbei ist es jedoch schwierig festzustellen, was ein optimales Anfrageintervall wäre. Es besteht also ein Zielkonflikt zwischen langen Anfrageintervallen, also Anfragen mit großen Zeitabständen zwischen den einzelnen Anfragen, und kurzen Abfrageintervallen. Erfolgt nämlich die jeweilige Anfrage an den Server vergleichsweise selten, so erfolgt auch eine Übermittlung von neuen, dynamischen Informationen vergleichsweise spät. Erfolgt die Abfrage demgegenüber in kurzen Zeitabständen, so müssen vergleichsweise häufig Anfrage-Daten übertragen werden, ohne dass es eine neue Information gibt. Es wird also viel Bandbreite benötigt und Mobilfunkressourcen werden verschwendet.

Alternativ kann das Fahrzeug eine dauerhafte Verbindung zum Server herstellen. Eine derartige Übertragung von Fahrzeuginformationen ist in der DE 10 2008 015 232 A1 beschrieben. Hier wird eine IP-Verbindung während der kompletten Fahrt aufrecht erhalten, und das Fahrzeug sendet in relativ kurzen Abständen seine aktuelle Position an einen Server. Indem das Fahrzeug seine Position an den Server sendet, kann ein Warndienst abonniert werden. Ereignisse, vor denen in diesem Zusammenhang gewarnt werden kann, umfassen etwa das Vorhandensein von Einsatzfahrzeugen, Straßenglätte, Verkehrszeichen, Baustellen und dergleichen.

Eine solche stehende Verbindung zur Zentrale oder zum Server, welcher auch als Backend bezeichnet wird, kann auch über VPN (Virtual Private Network, virtuelles privates Netzwerk) hergestellt werden. Ein Navigationssystem des Fahrzeugs kann hierbei kontinuierlich, oder wie in der DE 10 2008 015 232 A1 beschrieben periodisch, seine geographische Position beziehungsweise seine Fahrtroute melden.

Hierbei ergibt sich jedoch ein Problem im Hinblick auf die Privatsphäre des Fahrzeugnutzers. Denn die GPS-Daten, welche die geographische Position des Fahrzeugs angeben, sind dann jederzeit im Backend bekannt. Des Weiteren ergibt sich ein Komplexitätsproblem. Das Backend ist nämlich nicht mehr zustandslos, sondern es muss für jedes Fahrzeug sekündlich der letzte Standort mitgeführt werden. Dies liegt daran, dass beim Übertragen von Informationen lediglich ein Unterschied der in Antwort auf die vorherige Anfrage übertragenen Informationen übertragen wird. Ein solches Verfahren ist also vergleichsweise aufwändig.

Die DE 10 2013 106 669 A1 beschreibt ein Verfahren zum Normieren von Navigationsdaten. Hierbei sendet ein Prozessor durch eine mobile Einrichtung Daten an ein Standardisierungssystem. Der Prozessor kann die standardisierten Daten verarbeiten und Navigationsanweisungen bereitstellen.

Aufgabe der vorliegenden Erfindung ist es, ein besonders aufwandsarmes Verfahren der eingangs genannten Art und ein entsprechend betreibbares Fahrzeug zu schaffen.

Diese Aufgabe wird durch ein Verfahren mit den Merkmalen des Patentanspruchs 1 und durch ein Fahrzeug mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren ordnet die Zentrale die wenigstens eine Information einer vorbestimmten, als ortsfeste Kachel ausgebildeten Region zu. Die Zentrale veröffentlicht die der vorbestimmten Region zugeordnete wenigstens eine Information. Das Fahrzeug empfängt die wenigstens eine Information dann, wenn eine Steuerungseinrichtung des Fahrzeugs ein Empfangen von der vorbestimmten Region zugeordneten Informationen abonniert hat. Es kommt also in der fahrzeugexternen Zentrale, etwa einem Server, welcher auch als Backend bezeichnet wird, eine Publish-Subscribe Middleware zum Einsatz. Bei der Publish-Subscribe Middleware (= Zwischenanwendung für ein Veröffentlichen-Abonnieren) handelt es sich um eine Anwendung, welche ein Kommunikationsprotokoll unterstützt, welches ein Veröffentlichen und ein Abonnieren von Nachrichten oder Informationen ermöglicht.

Aufgrund des Einsatzes der Publish-Subscribe Middleware versendet die Zentrale die Informationen nicht an spezifische Empfänger direkt, sondern die Zentrale stellt die Informationen für ein Abgerufen-Werden zur Verfügung. Das Fahrzeug, welches die der vorbestimmten Region zugeordneten Informationen abonniert hat, empfängt also die Informationen, sofern die Zentrale überhaupt solche zur Verfügung stellt. Die Steuerungseinrichtung des Fahrzeugs abonniert entsprechend wenigstens eine vorbestimmte Region, und die Empfangseinrichtung empfängt die dieser Region zugeordneten Informationen. Die Zentrale oder das Backend veröffentlicht demgegenüber dynamische, also aktuelle Informationen basierend auf deren Zuordnung zu der wenigstens einen vorbestimmten Region.

Dies sorgt für eine minimale Latenz oder Verzögerung zwischen der Erzeugung oder Bereitstellung der Information durch die Zentrale und deren Zustellung an die Empfangseinrichtung des Fahrzeugs. Des Weiteren braucht die Zentrale nicht jedes Fahrzeug permanent im Hinblick auf dessen geographische Position zu überwachen, also zu tracken. Dies führt auch dazu, dass die Privatsphäre des Fahrzeugnutzers oder Fahrers gewahrt bleibt.

Es ist nämlich ausreichend, wenn die geographische Position, welche insbesondere anhand von GPS-Daten ermittelt werden kann, auf der Ebene der vorbestimmten Region bekannt ist. Die genaue Position des Fahrzeugs innerhalb der vorbestimmten Region braucht jedoch nicht ständig verfolgt zu werden. Dennoch empfängt die Empfangseinrichtung des Fahrzeugs die der vorbestimmten Region zugeordneten Informationen, deren Empfangen die Steuerungseinrichtung des Fahrzeugs abonniert hat.

Dies bringt es des Weiteren mit sich, dass von der Zentrale durchzuführende Rechenoperationen unabhängig vom Zustand beziehungsweise der Position des jeweiligen Fahrzeugs sind. Denn von der Zentrale wird einfach der mit der jeweiligen vorbestimmten Region verknüpfte Inhalt, also die der Region zugeordnete Information veröffentlicht. Dies macht das Verfahren besonders aufwandsarm.

Bei dem erfindungsgemäßen Verfahren empfängt die Empfangseinrichtung des Fahrzeugs die wenigstens eine Information, sobald die geographische Position des Fahrzeugs in der vorbestimmten Region zu liegen kommt. So wird sichergestellt, dass im Fahrzeug hochdynamische Informationen zeitnah zur Verfügung stehen und insbesondere dann, wenn diese für das Fahrzeug beziehungsweise den Fahrzeugnutzer relevant sind.

Von Vorteil ist es, dass die Steuerungseinrichtung des Fahrzeugs bei dem erfindungsgemäßen Verfahren ein Empfangen von Informationen abonniert, welche denjenigen vorbestimmten Regionen zugeordnet sind, durch welche eine mittels eines Navigationssystems des Fahrzeugs bestimmte Route verläuft. Dann ist sichergestellt, dass die auf dieser Route zur Verfügung stehenden Informationen an die Empfangseinrichtung des Fahrzeugs übertragen werden und so vom Fahrer und/oder von einem Fahrerassistenzsystem berücksichtigt beziehungsweise genutzt werden können.

Bei dem erfindungsgemäßen Verfahren empfängt die Empfangseinrichtung des Fahrzeugs Informationen, welche wenigstens einer anderen vorbestimmten Region zugeordnet sind als derjenigen, in welcher die geographische Position des Fahrzeugs zu liegen kommt. Dies erfolgt dann, wenn das Empfangen der Informationen an der geographischen Position des Fahrzeugs gegenüber dem Empfangen in der wenigstens einen anderen vorbestimmten Region erleichtert ist. Bei dem erfindungsgemäßen Verfahren wird so berücksichtigt, ob an der geographischen Position des Fahrzeugs gerade gute, leistungsfähige Funkverbindungen zum Empfangen der Informationen mittels der Empfangseinrichtung des Fahrzeugs bestehen, während in der wenigstens einen anderen vorbestimmten Region beispielsweise die Abdeckung mit Funkmasten geringer ist oder gar ein Funkloch erwartet werden kann. So lässt sich besonders gut eine Versorgung des Fahrzeugs mit den abonnierten Informationen sicherstellen.

Bei einer solchen Konstellation bezieht bevorzugt die Empfangseinrichtung des Fahrzeugs die Informationen, bevor das Fahrzeug die andere vorbestimmte Region erreicht, in welcher das Empfangen der Informationen erschwert ist. So kann besonders einfach sichergestellt werden, dass die für die jeweilige vorbestimmte Region relevanten Informationen dem Fahrzeug rechtzeitig und umfänglich vorliegen.

Als vorteilhaft hat es sich gezeigt, wenn die Steuerungseinrichtung des Fahrzeugs ein Empfangen von Informationen abonniert, welche wenigstens einer weiteren, an die vorbestimmte Region angrenzenden vorbestimmten Region zugeordnet sind. So können beispielsweise die umliegenden Regionen zugeordneten Informationen berücksichtigt werden, etwa wenn der Fahrer eine Route plant und hierbei die Informationen berücksichtigen möchte, welche einer an die Region angrenzenden Region zugeordnet sind. Dies ist insbesondere dann sinnvoll, wenn die Informationen die Verkehrslage, das Wetter, Sehenswürdigkeiten, Raststätten oder dergleichen betreffen. Denn so lässt sich die Route verbessert planen.

Als weiter vorteilhaft hat es sich gezeigt, wenn die Informationen von der Zentrale thematisch geordnet werden, wobei die Steuerungseinrichtung des Fahrzeugs ein Empfangen von zumindest einem Thema zugeordneten Informationen abonniert. So kann entschieden werden, zu welchen Themen im Fahrzeug Informationen zur Verfügung stehen sollen. Es können also besonders relevante von weniger relevanten Informationen anhand der Themenstruktur unterschieden werden. Weiterhin lassen sich so die Informatio-Als weiter vorteilhaft hat es sich gezeigt, wenn die Informationen von der Zentrale thematisch geordnet werden, wobei die Steuerungseinrichtung des Fahrzeugs ein Empfangen von zumindest einem Thema zugeordneten Informationen abonniert. So kann entschieden werden, zu welchen Themen im Fahrzeug Informationen zur Verfügung stehen sollen. Es können also besonders relevante von weniger relevanten Informationen anhand der Themenstruktur unterschieden werden. Weiterhin lassen sich so die Informationen beispielsweise von einem Fahrerassistenzsystem des Fahrzeugs und/oder vom Fahrzeugnutzer besonders leicht verarbeiten beziehungsweise beachten.

Es kann vorgesehen sein, dass ein Nutzer des Fahrzeugs das zumindest eine Thema auswählt, zu welchem die Informationen empfangen werden sollen. Der Nutzer kann dies insbesondere beim Einrichten der Steuerungseinrichtung festlegen. Es kann jedoch auch situationsabhängig ein besonders relevantes Thema wie etwa die Verkehrslage oder das Wetter gezielt ausgewählt werden.

Zusätzlich oder alternativ kann vorgesehen sein, dass die Zentrale an die Empfangseinrichtung des Fahrzeugs Informationen überträgt, welche einem anderen als dem von der Steuerungseinrichtung des Fahrzeugs abonnierten Thema zugeordnet sind. Dies ist insbesondere dann sinnvoll, wenn die entsprechenden Informationen sicherheitsrelevant sind und beispielsweise eine Warnung vor bevorstehender Straßenglätte, Nebel, Starkregen oder einer Naturkatastrophe beinhalten.

Schließlich hat es sich als vorteilhaft gezeigt, wenn ein Nachrichtenvermittler die der vorbestimmten Region zugeordnete wenigstens eine Information derart veröffentlicht, dass die wenigstens eine Information an eine Mehrzahl von Fahrzeugen übertragen wird. Hierbei haben die jeweiligen Steuerungseinrichtungen ein Empfangen von der vorbestimmten Region zugeordneten Informationen abonniert. Ein solcher Nachrichtenvermittler oder Message Broker sorgt für ein gut geordnetes Übertragen der Informationen oder Nachrichten an die verschiedenen Fahrzeuge. Zudem können so Informationen besonders einfach priorisiert werden.

Das erfindungsgemäße Fahrzeug ist zur Kommunikation mit der Zentrale nach dem erfindungsgemäßen Verfahren ausgebildet. Hierbei umfasst das Fahrzeug eine Empfangseinrichtung, welche zum Empfangen von wenigstens einer von der Zentrale bereitgestellten Information in Abhängigkeit von einer geographischen Position des Fahrzeugs ausgebildet ist. Eine Steuerungseinrichtung des Fahrzeugs ist derart eingerichtet, dass ein Empfangen von einer vorbestimmten Region zugeordneten Informationen abonniert ist. Die Informationen sind von der Zentrale der vorbestimmten Region zugeordnet und von der Zentrale veröffentlicht.

Mittels eines solchen Fahrzeugs lässt sich in aufwandsarmer Weise das Empfangen der Informationen sicherstellen, insbesondere ohne dass eine ständig stehende Verbindung zur Zentrale zum Einsatz kommt.

Die für das erfindungsgemäße Verfahren beschriebenen Vorteile und bevorzugten Ausführungsformen gelten auch für das erfindungsgemäße Verfahren und umgekehrt.

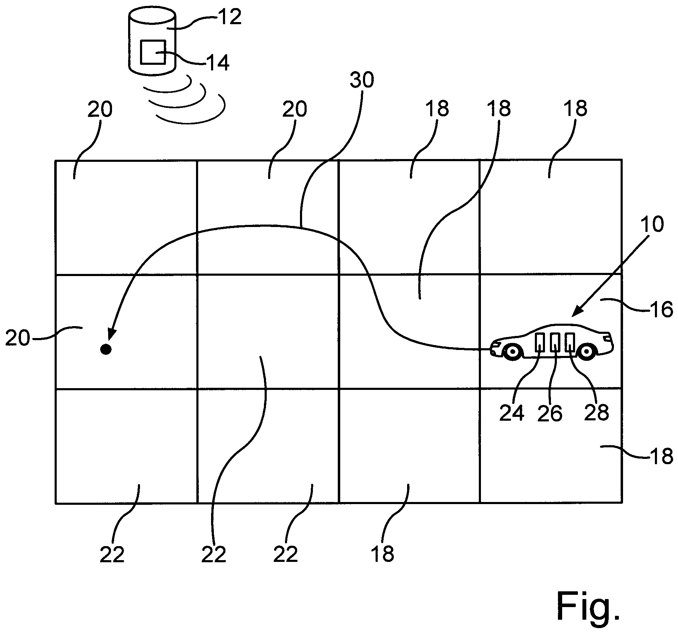

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisch das Übertragen von Informationen an eine Empfangseinrichtung eines Fahrzeugs, wobei das Fahrzeug die einer vorbestimmten Region zugeordneten Informationen abonniert hat.

In der Fig. sind schematisch Komponenten eines Systems zur Übertragung von hochdynamischen Events in ein Fahrzeug 10 gezeigt. Eine außerhalb des Fahrzeugs 10 angeordnete Zentrale 12, etwa ein Server, welcher auch als Backend bezeichnet werden kann, unterstützt einen Publish-Subscribe Mechanismus. Hierfür kann in der Zentrale 12 ein Nachrichtenvermittler 14 installiert sein, welcher auch als Message Broker bezeichnet wird. Beispielsweise kann als Nachrichtenvermittler 14 das von IBM vertriebene Produkt MessageSight genutzt werden, welches auf dem MQTT-Protokoll basiert (MQTT = Message Queue Telemetry Transport, Nachrichten-Warteschlange Telemetrie Transport).

Die Zentrale 12, bei welcher eine Publish-Subscribe Middleware zum Einsatz kommt, veröffentlicht also Informationen und stellt diese potentiellen Abonnenten zur Verfügung. Hierbei sind die Informationen jedoch vorbestimmten Regionen 16, 18, 20, 22 zugeordnet, welche in der Fig. schematisch als Kacheln dargestellt sind. Die Kacheln können beispielsweise so wie in dem freien Weltkartenprojekt OpenStreetMap ausgeprägt sein. Diese Kacheln oder Regionen 16, 18, 20, 22 sind also ortsfest und können beispielsweise eine Größe von 5 Kilometer auf 5 Kilometer aufweisen.

Das Fahrzeug 10 weist eine Empfangseinrichtung 24 auf, welche dem Empfangen der von der Zentrale 12 veröffentlichten Informationen dient. Eine Steuerungseinrichtung 26 des Fahrzeugs 10 abonniert dynamische Informationen für bestimmte Regionen 16, 18, 20, 22. Die Steuerungseinrichtung 26 des Fahrzeugs 10 abonniert sich auf die vorbestimmte Region 16, in welcher die geographische Position des Fahrzeugs 10 zu liegen kommt, in der sich das Fahrzeug 10 also aktuell befindet. Zusätzlich kann die Steuerungseinrichtung 26 jedoch auch von der Zentrale 12 veröffentlichte Informationen abonnieren, welche den vorbestimmten Regionen 18 zugeordnet sind, welche an den die vorbestimmte Region 16 angrenzen.

Des Weiteren kann vorgesehen sein, dass die Steuerungseinrichtung 26 das Fahrzeug 10 auf Regionen 18, 20 abonniert, durch welche eine Route 30 verläuft, die mittels eines Navigationssystems 28 des Fahrzeugs 10 bestimmt wurde.

Der Vorgang des Abonnierens erfordert in vorteilhafter Weise wenig Bandbreite, also lediglich eine geringe Datenübertragungsrate. Zudem braucht die Zentrale 12 die Position des Fahrzeugs 10, also dessen beispielsweise mittels eines GPS-Empfängers des Fahrzeugs 10 ermittelte Koordinaten, nicht fortwährend zu verfolgen. Die Rechenoperationen in der Zentrale 12 sind somit unabhängig von der Position des Fahrzeugs 10. Des Weiteren bleibt die Privatsphäre des Fahrers des Fahrzeugs 10 gewahrt. Zudem erlaubt der Publish-Subscribe Mechanismus das Übertragen der jeweiligen Informationen an die Empfangseinrichtung 24 des Fahrzeugs 10 mit einer minimalen Verzögerung.

Bevorzugt ordnet die Zentrale 12 die von der Zentrale 12 dem abonnierenden Fahrzeug 10 beziehungsweise einer Mehrzahl von abonnierenden Fahrzeugen 10 zur Verfügung gestellten Informationen thematisch. Entsprechend kann auch die Steuerungseinrichtung 26 beispielsweise anhand einer Themenstruktur gewünschte Informationen abonnieren. Hierbei kann insbesondere eine bevorzugt den Einsatz von Platzhaltern zulassende Suchanfrage zum Einsatz kommen.

Beispielsweise kann die Steuerungseinrichtung 26 des Fahrzeugs 10 alle zumindest bereichsweise mit einer bestimmten Stadt überlappenden vorbestimmten Regionen 16, 18, 20, 22 abonnieren. Hier können alle zur Verfügung stehenden Dienste oder Themen ausgewählt werden, oder es kann sich das Abonnement auf bestimmte Themen beschränken. Beispielsweise können die Regionen 16, 18, 20, 22 einer Stadt wie etwa Ingolstadt von der Steuerungseinrichtung 26 des Fahrzeugs 10 für alle Dienste oder Themen abonniert werden. Das Abonnement kann also lauten: "Abonniere Ingolstadt, alle Dienste". Alternativ kann das Abonnement lauten: "Abonniere Ingolstadt, Thema Verkehrszeichen". Die Steuerungseinrichtung 26 kann also über den Umfang der Themen oder Dienste entscheiden, für welche es Aktualisierungen oder Updates von der Zentrale 12 übermittelt bekommen möchte. Derartige Dienste, Themen oder Eventtypen können jedoch auch von einem Nutzer des Fahrzeugs 10, beispielsweise vom Fahrer, ausgewählt werden.

Zudem kann aufgrund der Zuordnung der Informationen zu den vorbestimmten Regionen 16, 18, 20, 22 die geographische Ausdehnung des Abonnements von der Steuerungseinrichtung 26 festgelegt werden.

Soll nun eine bestimmte dynamische, also beispielsweise eine Aktualisierung beinhaltende Information oder Nachricht von der Zentrale 12 an die Empfangseinrichtung 24 des Fahrzeugs 10 übertragen werden, so kann die Zentrale 12 zunächst einen entsprechenden Publish-Mechanismus zu der vorbestimmten Region 16, 18, 20, 22 durchführen. Die Zentrale 12 veröffentlicht also die der jeweiligen vorbestimmten Region 16, 18, 20, 22 zugeordneten Informationen. Die Fahrzeuge 10, deren Steuerungseinrichtung 26 sich für diese vorbestimmte Region 16, 18, 20, 22 subskribiert oder abonniert haben, bekommen dann die Informationen unmittelbar, also mit minimaler Latenz zugestellt.

## Patentansprüche

1. Verfahren zum Betreiben eines Fahrzeugs (10), bei welchem eine Zentrale (12) in Abhängigkeit von einer geographischen Position des Fahrzeugs (10) wenigstens eine Information an eine Empfangseinrichtung (24) des Fahrzeugs (10) überträgt, wobei die Zentrale (12) die wenigstens eine Information einer vorbestimmten, als ortsfeste Kachel ausgebildeten Region (16, 18, 20, 22) zuordnet und die der vorbestimmten Region (16, 18, 20, 22) zugeordnete wenigstens eine Information veröffentlicht, wobei die Zentrale (12) die Informationen aufgrund des Einsatzes einer Publish-Subscribe Middleware für ein Abgerufen-Werden zur Verfügung stellt, wobei das Fahrzeug (10) die wenigstens eine Information dann empfängt, wenn eine Steuerungseinrichtung (26) des Fahrzeugs (10) ein Empfangen von der vorbestimmten, durch die Steuerungseinrichtung (26) des Fahrzeugs (10) abonnierten Region (16, 18, 20, 22) zugeordneten Informationen abonniert hat, wobei die Steuerungseinrichtung (26) des Fahrzeugs (10) ein Empfangen von Informationen abonniert, welche denjenigen vorbestimmten Regionen (16, 18, 20) zugeordnet sind, durch welche eine mittels eines Navigationssystems (28) des Fahrzeugs (10) bestimmte Route (30) verläuft, wobei die Empfangseinrichtung (24) des Fahrzeugs (10) die wenigstens eine Information empfängt, sobald die geographische Position des Fahrzeugs (10) in der vorbestimmten Region (16) zu liegen kommt, und wobei die Empfangseinrichtung (24) des Fahrzeugs (10) Informationen empfängt, welche wenigstens einer anderen vorbestimmten Region (18, 20, 22) zugeordnet sind als derjenigen, in welcher die geographische Position des Fahrzeugs (10) zu liegen kommt, wenn das Empfangen der Informationen an der geographischen Position des Fahrzeugs (10) gegenüber dem Empfangen in der wenigstens einer anderen vorbestimmten Region (18, 20, 22) erleichtert ist, weil an der geographischen Position des Fahrzeugs (10) leistungsfähigere Funkverbindungen zum Empfangen der Informationen mittels der Empfangseinrichtung (24) des Fahrzeugs (10) bestehen als in der wenigstens einen anderen vorbestimmten Region (18, 20, 22).

2. Verfahren nach Anspruch 1, wobei die Steuerungseinrichtung (26) des Fahrzeugs (10) ein Empfangen von Informationen abonniert, welche wenigstens einer weiteren, an die vorbestimmte Region (16) angrenzenden vorbestimmten Region (18) zugeordnet sind.

3. Verfahren nach einem der Ansprüche 1 bis 2, wobei die Informationen von der Zentrale (12) thematisch geordnet werden, wobei die Steuerungseinrichtung (26) des Fahrzeugs (10) ein Empfangen von zumindest einem Thema zugeordneten Informationen abonniert.

4. Verfahren nach Anspruch 3, wobei ein Nutzer des Fahrzeugs (10) das zumindest eine Thema auswählt.

5. Verfahren nach Anspruch 3 oder 4, wobei die Zentrale (12) an die Empfangseinrichtung (24) des Fahrzeugs (10) Informationen überträgt, welche einem anderen als dem von der Steuerungseinrichtung (26) des Fahrzeugs (10) abonnierten Thema zugeordnet sind.

6. Verfahren nach einem der Ansprüche 1 bis 5, wobei ein Nachrichtenvermittler (14) die der vorbestimmten Region (16, 18, 20, 22) zugeordnete wenigstens eine Information derart veröffentlicht, dass die wenigstens eine Information an eine Mehrzahl von Fahrzeugen (10) übertragen wird, deren jeweilige Steuerungseinrichtungen (26) ein Empfangen von der vorbestimmten Region (16, 18, 20, 22) zugeordneten Informationen abonniert haben.

7. Fahrzeug mit einer Empfangseinrichtung (24), welche zum Empfangen von wenigstens einer von einer Zentrale (12) bereitgestellten Information in Abhängigkeit von einer geographischen Position des Fahrzeugs (10) ausgebildet ist, wobei eine Steuerungseinrichtung (26) des Fahrzeugs (10) derart eingerichtet ist, dass ein Empfangen von einer vorbestimmten, als ortsfeste Kachel ausgebildeten und durch die Steuerungseinrichtung (26) des Fahrzeugs (10) abonnierten Region (16, 18, 20, 22) zugeordneten Informationen abonniert ist, welche von der Zentrale (12) der vorbestimmten Region (16, 18, 20, 22) zugeordnet und von der Zentrale (12) veröffentlicht sind, wobei die Zentrale (12) die Informationen aufgrund des Einsatzes einer Publish-Subscribe Middleware für ein Abgerufen-Werden zur Verfügung stellt, und wobei die Steuerungseinrichtung (26) des Fahrzeugs (10) derart eingerichtet ist, dass ein Empfangen von Informationen abonniert ist, welche denjenigen vorbestimmten Regionen (16, 18, 20) zugeordnet sind, durch welche eine mittels eines Navigationssystems (28) des Fahrzeugs (10) bestimmte Route (30) verläuft, wobei die Empfangseinrichtung (24) des Fahrzeugs (10) dazu ausgebildet ist, die wenigstens eine Information zu empfangen, sobald die geographische Position des Fahrzeugs (10) in der vorbestimmten Region (16) zu liegen kommt, und wobei die Empfangseinrichtung (24) des Fahrzeugs (10) zum Empfangen von Informationen ausgebildet ist, welche wenigstens einer anderen vorbestimmten Region (18, 20, 22) zugeordnet sind als derjenigen, in welcher die geographische Position des Fahrzeugs (10) zu liegen kommt, wenn das Empfangen der Informationen an der geographischen Position des Fahrzeugs (10) gegenüber dem Empfangen in der wenigstens einer anderen vorbestimmten Region (18, 20, 22) erleichtert ist, weil an der geographischen Position des Fahrzeugs (10) leistungsfähigere Funkverbindungen zum Empfangen der Informationen mittels der Empfangseinrichtung (24) des Fahrzeugs (10) bestehen als in der wenigstens einen anderen vorbestimmten Region (18, 20, 22).

## Claims

1. Method for operating a vehicle (10), in which as a function of a geographical position of the vehicle (10) a control centre (12) transmits at least one piece of information to a receiving device (24) of the vehicle (10),
wherein the control centre (12) discloses the at least one piece of information associated with a predefined region (16, 18, 20, 22) in the form of a fixed tile and the at least one piece of information associated with the predefined region (16, 18, 20, 22), wherein the control centre (12) makes the pieces of information available for retrieval by the use of publish/subscribe middleware, wherein the vehicle (10) receives the at least one piece of information when a control device (26) of the vehicle (10) has subscribed to receiving pieces of information from the predefined region (16, 18, 20, 22) subscribed to by the control device (26) of the vehicle (10), wherein the control device (26) of the vehicle (10) subscribes to receiving pieces of information, which are assigned to those predefined regions (16, 18, 20) through which a route (30) determined by means of a navigation system (28) of the vehicle (10) runs, wherein the receiving device (24) of the vehicle (10) receives the at least one piece of information, as soon as the geographical position of the vehicle (10) comes to lie in the predefined region (16), and wherein the receiving device (24) of the vehicle (10) receives pieces of information which are assigned to at least one other predefined region (18, 20, 22) than the one in which the geographical position of the vehicle (10) comes to lie, when receiving the pieces of information at the geographical position of the vehicle (10) is made easier than receiving it in the at least one other predefined region (18, 20, 22), because at the geographical position of the vehicle (10) there are more powerful radio connections for receiving the pieces of information by means of the receiving device (24) of the vehicle (10) than in the at least one other predefined region (18, 20, 22).

2. Method according to claim 1,
wherein the control device (26) of the vehicle (10) subscribes to receiving pieces of information which are assigned to at least one further predefined region (18) adjoining the predefined region (16).

3. Method according to any of claims 1 to 2,
wherein the pieces of information from the control centre (12) are ordered thematically, wherein the control device (26) of the vehicle (10) subscribes to receiving at least pieces of information assigned to at least one topic.

4. Method according to claim 3,
wherein a user of the vehicle (10) selects the at least one topic.

5. Method according to claim 3 or 4,
wherein the control centre (12) transmits pieces of information to the receiving device (24) of the vehicle (10), which are assigned to a different topic than the one subscribed to by the control device (26) of the vehicle (10).

6. Method according to any of claims 1 to 5,
wherein a message transmitter (14) discloses the at least one piece of information assigned to the predefined region (16, 18, 20, 22) such that the at least one piece of information is transmitted to a plurality of vehicles (10), the respective control devices (26) of which have subscribed to receiving pieces of information associated with the predefined region (16, 18, 20, 22).

7. Vehicle having a receiving device (24), which is designed for receiving at least one piece of information provided by a control centre (12) as a function of a geographical position of the vehicle (10),
wherein a control device (26) of the vehicle (10) is configured such that receiving is subscribed to for pieces of information assigned to a predefined region (16, 18, 20, 22) in the form of a stationary tile and subscribed to by the control device (26) of the vehicle (10), which pieces of information are assigned by the control centre (12) of the predefined region (16, 18, 20, 22) and disclosed by the control centre (12), wherein the control centre (12) makes the pieces of information available for retrieval by the use of publish/subscribe middleware, and wherein the control device (26) of the vehicle (10) is configured such that it is subscribed to receiving pieces of infromation, which are assigned to those predefined regions (16, 18, 20) through which a route (30) defined by means of a navigation system (28) of the vehicle (10) runs, wherein the receiving device (24) of the vehicle (10) is configured to receive the at least one piece of information, as soon as the geographical position of the vehicle (10) comes to be located in the predefined region (16), and wherein the receiving device (24) of the vehicle (10) is configured to receive pieces of information, which are assigned to at least one other predefined region (18, 20, 22) than the one in which the geographical position of the vehicle (10) comes to be located, when receiving of pieces of information at the geographical position of the vehicle (10) is made easier than receiving it in the at least one other predefined region (18, 20, 22), because there are more powerful radio connections for receiving pieces of information by means of the receiving device (24) of the vehicle (10) at the geographical position of the vehicle (10) than in the at least one other predefined region (18, 20, 22).

## Revendications

1. Procédé de fonctionnement d'un véhicule (10), dans lequel une centrale (12) transmet au moins une information à un appareil de réception (24) du véhicule (10) en fonction d'une position géographique du véhicule (10),
dans lequel la centrale (12) attribue l'au moins une information à une région prédéterminée (16, 18, 20, 22) formée en tant que dalle fixe et publie l'au moins une information attribuée à la région prédéterminée (16, 18, 20, 22), dans lequel la centrale (12) met à disposition les informations sur la base de l'utilisation d'un middleware Publish-Subscribe pour être appelé, dans lequel le véhicule (10) reçoit alors l'au moins une information, lorsqu'un dispositif de commande (26) du véhicule (10) s'est abonné à une réception d'informations attribuées à la région prédéterminée (16, 18, 20, 22) abonnée par le dispositif de commande (26) du véhicule (10), dans lequel le dispositif de commande (26) du véhicule (10) s'abonne à une réception d'informations, lesquelles sont attribuées aux régions prédéterminées (16, 18, 20), par lesquelles passe un itinéraire (30) déterminé au moyen d'un système de navigation (28) du véhicule (10), dans lequel l'appareil de réception (24) du véhicule (10) reçoit l'au moins une information dès que la position géographique du véhicule (10) se situe dans la région prédéterminée (16), et dans lequel l'appareil de réception (24) du véhicule (10) reçoit des informations, lesquelles sont attribuées à au moins une autre région prédéterminée (18, 20, 22) que celle dans laquelle se situe la position géographique du véhicule (10), si la réception des informations dans la position géographique du véhicule (10) est facilitée par rapport à la réception dans l'au moins une autre région prédéterminée (18, 20, 22), parce qu'il existe dans la position géographique du véhicule (10) des liaisons radio plus performantes pour la réception des informations au moyen de l'appareil de réception (24) du véhicule (10) que dans l'au moins une autre région prédéterminée (18, 20, 22).

2. Procédé selon la revendication 1,
dans lequel le dispositif de commande (26) du véhicule (10) s'abonne à une réception d'informations, lesquelles sont attribuées à au moins une autre région prédéterminée (18) adjacente à la région prédéterminée (16).

3. Procédé selon l'une quelconque des revendications 1 à 2,
dans lequel les informations sont classées par thème par la centrale (12), dans lequel le dispositif de commande (26) du véhicule (10) s'abonne à une réception d'informations attribuées à au moins un thème.

4. Procédé selon la revendication 3,
dans lequel un utilisateur du véhicule (10) sélectionne ledit au moins un thème.

5. Procédé selon la revendication 3 ou 4,
dans lequel la centrale (12) transmet à l'appareil de réception (24) du véhicule (10) des informations, lesquelles sont attribuées à un thème autre que celui auquel s'est abonné le dispositif de commande (26) du véhicule (10).

6. Procédé selon l'une quelconque des revendications 1 à 5,
dans lequel un médiateur de messages (14) publie l'au moins une information attribuée à la région prédéterminée (16, 18, 20, 22) de sorte que l'au moins une information est transmise à une pluralité de véhicules (10), dont les dispositifs de commande respectifs (26) se sont abonnés à la réception d'informations attribuées à la région prédéterminée (16, 18, 20, 22).

7. Véhicule avec un appareil de réception (24), lequel est conçu pour recevoir au moins une information mise à disposition par une centrale (12) en fonction d'une position géographique du véhicule (10),
dans lequel un dispositif de commande (26) du véhicule (10) est configuré de sorte qu'une réception d'informations attribuées est abonnée à une région prédéterminée (16, 18, 20, 22), formée en tant que dalle fixe et à laquelle le dispositif de commande (26) du véhicule (10) est abonnée, lesquelles informations sont attribuées par la centrale (12) à la région prédéterminée (16, 18, 20, 22) et sont publiées par la centrale (12), dans lequel la centrale (12) met à disposition les informations sur la base de l'utilisation d'un middleware Publish-Subscribe pour être appelé, et dans lequel le dispositif de commande (26) du véhicule (10) est configuré de sorte qu'un abonnement est souscrit à une réception d'informations, lesquelles sont attribuées aux régions prédéterminées (16, 18, 20), par lesquelles passe un itinéraire (30) déterminé au moyen d'un système de navigation (28) du véhicule (10), dans lequel l'appareil de réception (24) du véhicule (10) est conçu pour recevoir ladite au moins une information dès que la position géographique du véhicule (10) se situe dans la région prédéterminée (16), et dans lequel l'appareil de réception (24) du véhicule (10) est conçu pour recevoir des informations qui sont attribuées à au moins une autre région prédéterminée (18, 20, 22) que celle dans laquelle se situe la position géographique du véhicule (10), si la réception des informations dans la position géographique du véhicule (10) est facilitée par rapport à la réception dans l'au moins une autre région prédéterminée (18, 20, 22), parce qu'il existe dans la position géographique du véhicule (10) des liaisons radio plus performantes pour la réception des informations au moyen de l'appareil de réception (24) du véhicule (10) que dans l'au moins une autre région prédéterminée (18, 20, 22).
